Europäisches Patentamt

European Patent Office

Office européen des brevets

(11) Veröffentlichungsnummer : **0 175 190**
**B1**

(12)

# EUROPÄISCHE PATENTSCHRIFT

(45) Veröffentlichungstag der Patentschrift :
28.06.89

(51) Int. Cl.⁴ : **A 01 D 78/12**

(21) Anmeldenummer : 85110935.5

(22) Anmeldetag : 30.08.85

(54) Heuwerbungsmaschine.

(30) Priorität : 10.09.84 DE 3433223

(43) Veröffentlichungstag der Anmeldung :
26.03.86 Patentblatt 86/13

(45) Bekanntmachung des Hinweises auf die Patenterteilung : 28.06.89 Patentblatt 89/26

(84) Benannte Vertragsstaaten :
AT CH FR IT LI NL

(56) Entgegenhaltungen :
DE–A– 2 904 244
DE–A– 3 029 502
DE–A– 3 120 370
DE–B– 2 416 316
DE–U– 8 103 974

(73) Patentinhaber : GREENLAND GMBH & CO. KG
Erwin-Dietrich-Platz 1
D-7702 Gottmadingen (DE)

(72) Erfinder : Wessel, Ulrich
Hilzingerstrasse 33
D-7702 Gottmadingen (DE)
Erfinder : Eisenmann, Bernhard
Leipferdingerstrasse 12
D-7708 Tengen 1 (DE)

(74) Vertreter : Patentanwälte Grünecker, Kinkeldey,
Stockmair & Partner
Maximilianstrasse 58
D-8000 München 22 (DE)

## Beschreibung

Die vorliegende Erfindung betrifft eine Heuwerbungsmaschine zum Anbau an eine Zugmaschine, mit mindestens einem um eine im wesentlichen senkrechte Zentralachse umlaufenden Rechrad, das mehrere, bezüglich der Zentralachse radial angeordnete, geführte Tragarme mit Zinken aufweist, wobei die Kurvenbahnen für die Tragarme mit den zugehörigen, die Heuwerbungsmaschine unterstützenden Laufrädern in Bezug auf die Zentralachse in zwei um etwa 180° gegeneinander versetzt liegende Stellungen verschwenkbar und dort jeweils verriegelbar sind.

Solche Heuwerbungsmaschinen liefern eine vorzügliche Schwadarbeit, wobei die Kurvenbahnen für die Tragarme dafür sorgen, daß die Zinken das Futter auf dem vorderen Teil ihrer Umlaufbahn zusammenrechen, während sie auf dem seitlichen Teil ihrer Umlaufbahn ausgehoben werden, um so die Ausbildung eines Schwads zu ermöglichen, während sie auf dem rückwärtigen Teil ihrer Umlaufbahn wieder in ihrer Arbeitsstellung zurückkehren. Damit ein derartiger Kreiselschwader sowohl beim Vorwärtsfahren als auch beim Rückwärtsfahren einwandfreie Schwaden ablegt, ist es bekannt, die die Tragarme mit den Zinken steuernden Kurvenbahnen um etwa 180° bzgl. der Zentralachse zu verschwenken und in der neuen Stellung wieder zu verriegeln.

So ist aus der DE-B-24 16 316 eine derartige Heuwerbungsmaschine bekannt, bei der die die Steuerung der Zinken bewirkende Kurvenbahn und das zugehörige Stützrad gemeinsam um 180° verschwenkbar und feststellbar sind, bei der jedoch die für die Umstellung der Kurvenbahn und des Stützrades notwendigen Bedienungselemente unterhalb des Rechrades angeordnet sind. Zur Umstellung muß dabei der Fahrer vom Schlepper absteigen und sowohl die Verschwenkvorrichtung betätigen als auch die Verriegelungsvorrichtung, die aus einem radial zur Achse verschiebbar angeordneten Bolzen besteht, der unter dem Druck einer Feder in eine von zwei etwa 180° gegeneinander versetzt angeordnete Ausnehmungen einer mit der Achse verbundenen Scheibe einrastet und getrennt betätigt werden muß.

Ferner ist aus dem DE-U-81 03 974 eine Heuwerbungsmaschine bekannt, bei der die Umsetzung der Kurvenscheibe und des Laufrades in die eine oder andere um 180° gegeneinander versetzt liegende Stellung dadurch erfolgt, daß das Laufrad und die Kurvenscheibe auf einer gemeinsamen Verstellachse befestigt sind, wobei an dem oberhalb des Rechrades liegendem Ende der Verstellachse ein Zahnrad gelagert ist, welches nach Lösen der Rastverbindung mit einem Ritzel einer Stellspindel in Eingriff gelangt. Um die Rastverbindung zu lösen, muß die Stellspindel gegen die Wirkung einer Feder axial verschoben werden, um so einen zweiarmigen Schwenkhebel zu betätigen, dessen einer Hebelarm in eine Aussparung des Zahnrades eingreift, während der andere Hebelarm in eine Ringnut der Stellspindel eingreift. Zur Umstellung der Maschine muß hierbei also zuerst eine Entriegelung, dann die gewünschte Verstellung und danach eine Verriegelung manuell vorgenommen werden.

Der vorliegenden Erfindung liegt die Aufgabe zugrunde, eine derartige Heuwerbungsmaschine weiter zu vereinfachen, d. h. derart auszugestalten, daß beim Umstellen der Maschine von der einen in die andere Fahrtrichtung durch eine einzige manuelle Betätigung sowohl ein automatisches Entriegeln mit manueller Verstellung als auch anschließendes automatisches Verriegeln erfolgt.

Ausgehend von einer Heuwerbungsmaschine der eingangs näher genannten Art wird zur Lösung dieser Aufgabe vorgeschlagen, daß am oberen Ende der Zentralachse eine drehbar gelagerte Steuerkurve vorgesehen ist, deren unterer Teil als Zahnrad ausgebildet ist, das mit einem Antriebszahnrad einer Betätigungsvorrichtung in Eingriff steht, daß die Steuerkurve auf der drehbar gelagerten Nabe eines Arretierungsriegels gelagert ist, daß der Arretierungsriegel mit einem Vorsprung versehen ist, der mit einem ersten Anschlag der Steuerkurve zusammenwirkt und daß der Arretierungsriegel einen Mitnehmernocken aufweist, der mit einem zweiten Anschlag der Steuerkurve zusammenwirkt.

Bei einem vorteilhaften Ausführungsbeispiel ist der eine Anschlag am Ende einer Schräge auf der Steuerkurve angeordnet und wirkt mit dem als Stellschraube ausgebildeten Vorsprung des Arretierungsriegels zusammen.

Es ist weiterhin vorteilhaft, wenn das die Steuerkurve umgebende Gehäuse zwei um etwa 180° zueinander versetzte Arretierungsnuten aufweist, wobei beidseitig der Nuten Schrägen zur Führung des Arretierungsriegels vorgesehen sind.

Besonders günstig ist es, wenn das Zahnrad der Steuerkurve als Kegelrad ausgebildet ist und das Antriebszahnrad der Betätigungsvorrichtung als damit kämmendes Antriebsritzel ausgebildet ist.

Der Arretierungsriegel kann durch eine Feder beaufschlagt werden, die ihn in Richtung der Arretierungsnuten drückt.

Die Halteanordnung für den Arretierungsriegel ist dabei drehfest mit der Zentralachse verbunden.

Mit der Erfindung wird also der Vorteil erzielt, daß eine derart ausgestaltete Heuwerbungsmaschine mit nur einer einzigen Drehbewegung der Betätigungsvorrichtung, die z. B. vom Fahrer und vom Fahrersitz aus betätigbar ist, schnell und automatisch von der Stellung zum Vorwärtsfahren in die Stellung zum Rückwärtsfahren umgestellt werden kann, wobei vollautomatisch die Verriegelung gelöst und nach Beendigung des Verschwenkvorgangs wieder eingerastet wird, wobei die Betätigungsvorrichtung immer nur in einer Richtung verdreht wird.

Im folgenden wird die Erfindung anhand der Zeichnung näher erläutert, in der ein vorteilhaftes Ausführungsbeispiels dargestellt ist. Es zeigen

Figur 1 schematisch eine Seitenansicht eines Kreiselschwaders,

Figur 2 eine vergrößerte Ansicht des in Figur 1 mit einem gestrichelten Kreis angedeuteten Verstellmechanismus,

Figur 3 einen Schnitt durch die Zentralachse der Maschine,

Figur 4 eine Draufsicht auf die Maschine,

Figur 5 einen Teilschnitt entlang der Linie B-B von Figur 4,

Figur 6 eine Draufsicht auf diesen Teilschnitt,

Figur 7 einen Teilschnitt entlang der Linie C-C von Figur 4 und

Figur 8 eine Draufsicht auf diesen Teilschnitt.

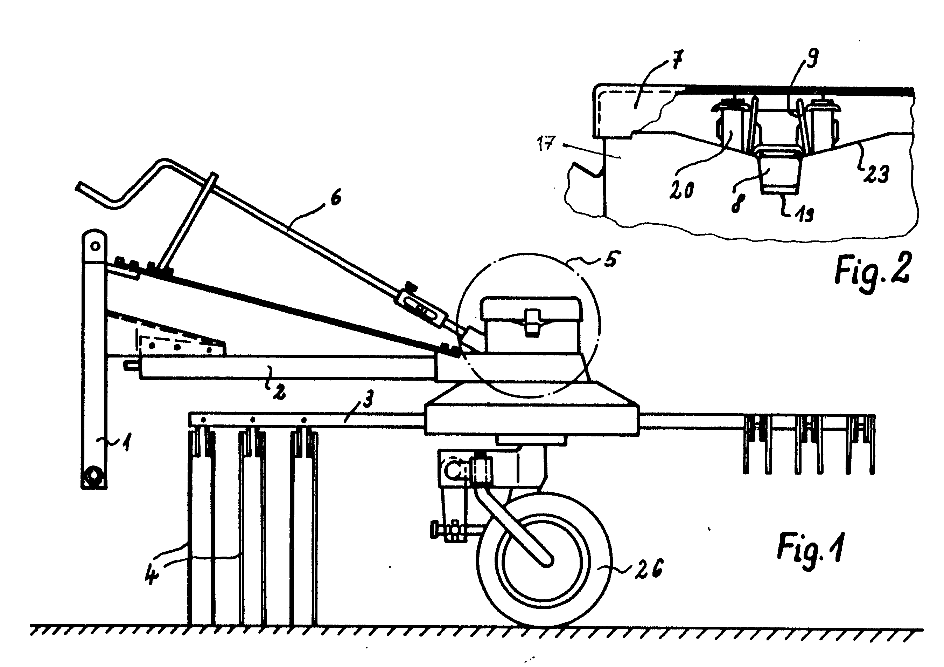

Bei der in Figur 1 schematisch dargestellten Heuwerbungsmaschine ist mit 1 ein Anbaubock bezeichnet, mit der die Heuwerbungsmaschine in üblicher Weise an einen Schlepper angeschlossen werden kann, wobei der Antrieb der mit den Zinken 4 versehenen Tragarmen 3 eines jeden Recharmes über die Antriebswelle 2 erfolgt, die mit dem Zapfwellenanschluß des Schleppers verbunden ist. Auf dem Boden stützt sich die Heuwerbungsmaschine über Laufräder 26 ab. Mit 6 ist eine als Handkurbel ausgebildete Betätigungsvorrichtung bezeichnet, mit der die die Bewegung der Tragarme 3 steuernden Kurvenbahnen sowie auch die Laufräder 26 um 180° verschwenkt werden können, so daß die Heuwerbungsmaschine sowohl zum Vorwärtsfahren als auch zum Rückwärtsfahren geeignet ist.

Eine vergrößerte Darstellung der durch den gestrichelten Kreis 5 angedeuteten Verriegelungsvorrichtung ist in Figur 2 dargestellt. Unterhalb einer Schutzabdeckung 7 ist ein Arretierungsriegel 8 vorgesehen, der in einer von zwei um 180° voneinander versetzten Arretierungsnuten 19 am Gehäuse 17 eingreift und durch eine Feder 9 in diese Aussparung gedrückt wird.

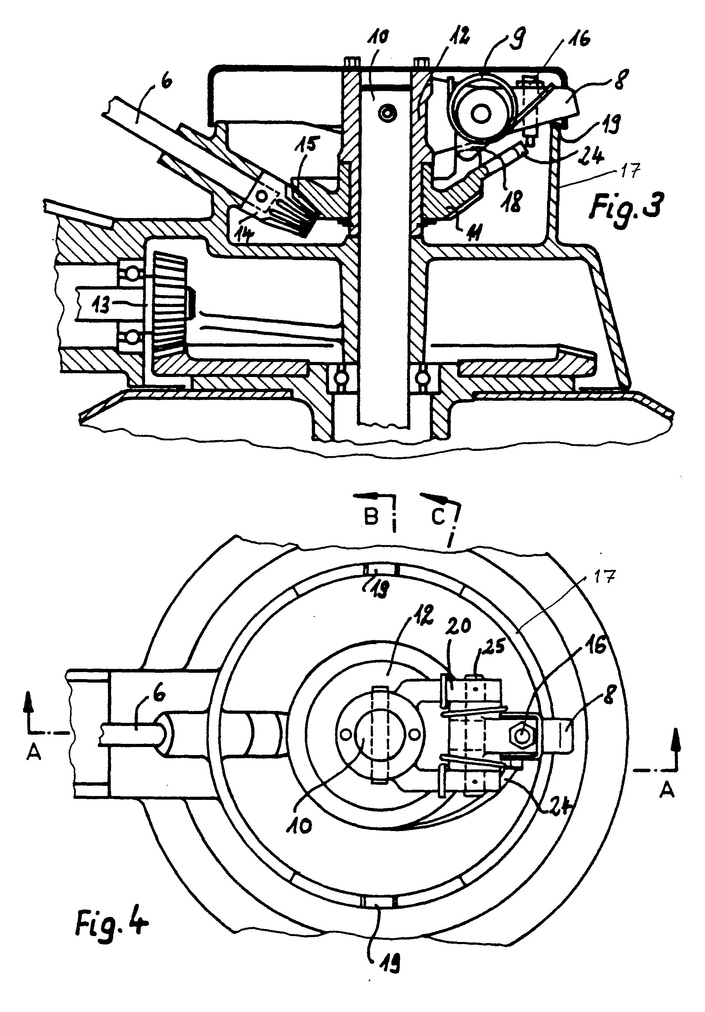

In Figur 3 ist ein Schnitt entlang der Zentralachse durch die erfindungsgemäß ausgebildete Heuwerbungsmaschine dargestellt. Mit 6 ist wieder die Betätigungsvorrichtung bezeichnet, an deren unteren Ende ein Antriebszahnrad in Form eines kleinen Kegelrades 14 vorgesehen ist, das im kämmenden Eingriff mit einem ebenfalls als Kegelrad ausgebildeten Zahnrad 15 steht, das wiederum den unteren Teil einer Steuerkurve 11 darstellt. Die Steuerkurve 11 mit dem zugehörigen Kegelrad 15 kann auf der Nabe 12 des Arretierungsriegels 8 umlaufen, infolge des Antriebs durch die Betätigungsvorrichtung 6. Der von der Feder 9 beaufschlagte Arretierungsriegel 8 weist in der Nähe seines der Nabe 12 zugewandten Endes einen Mitnehmernocken 18 auf und greift mit seinem der Nabe 12 abgewandten Ende in die Nut 19 im Gehäuse 17 ein.

Mit 13 ist ferner der herkömmliche Antrieb für das nicht näher dargestellte Rechrad bezeichnet, das über bekannte Kurvenbahnen und Steuerrollen entsprechend drehbar gelagert ist.

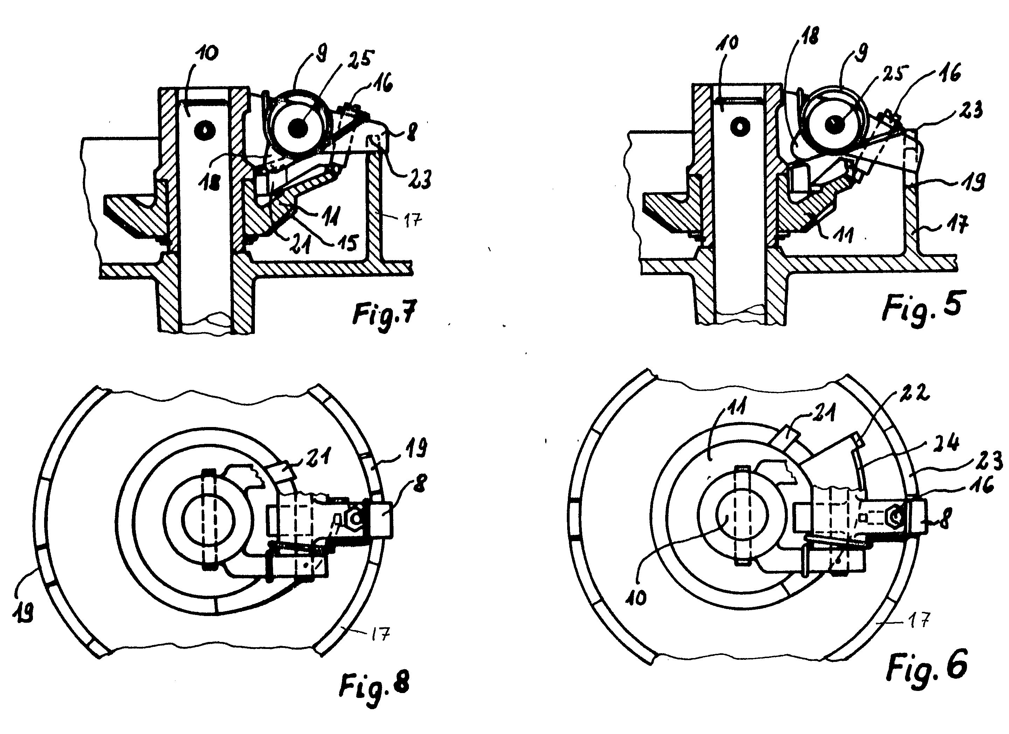

Wie auch aus Figur 4 hervorgeht, ist der Arretierungsriegel 8 mit einem Vorsprung 16 versehen, der die Form eine einstellbaren Stellschraube hat und mit der Steuerkurve 11 zusammenwirkt. Der Arretierungsriegel 8 sowie die Feder 9 sind an einer Halteanordnung 20 derart befestigt, daß der Arretierungsriegel 8 um eine Achse 25 verdrehbar ist. Die Halteanordnung 20 und die zugehörige Nabe 12 sind drehfest z. B. über eine Schraubverbindung mit der Zentralachse 10 verbunden.

Figur 5 stellt einen Schnitt entlang der Linie B-B von Figur 4 dar und zwar in derjenigen Stellung, in der die Aufhängung des Rechrades gerade entriegelt wird. Durch Drehen der Betätigungsvorrichtung 6 wird die Steuerkurve (gemäß Figuren 4 und 6) in Uhrzeigerrichtung verdreht, wobei die Stellschraube 16 auf einer am Umfang der Steuerkurve 11 vorgesehenen Schräge 24 angehoben wird, so daß sich der Riegel 8 aus der Nut 19 hebt. Am Ende der Schräge 24 ist ein Anschlag 22 vorgesehen, der die Stellschraube 16 und damit auch den Arretierungsriegel 8 selbst bei Weiterdrehung der Steuerkurve 11 mitnimmt. Nun gelangt der Arretierungsriegel 8 auf eine am Umfang des Gehäuses 17 vorhandene Schräge 23, so daß er beim Weitergleiten auf dieser Schräge 23 über den Anschlag 22 gehoben wird, d. h. daß der Riegel 8 und die Stellschraube 16 außer Eingriff mit dem Anschlag 22 gelangen.

Am Umfang der Steuerkurve 11 ist hinter dem Anschlag 22 ein weiterer Anschlag 21 vorgesehen, der nun mit dem Mitnehmernocken 18 des Arretierungsriegels 8 in Eingriff gelangt, so daß in dieser Stellung der Arretierungsriegel 8 bis zu der um 180° gegenüberliegenden Arretierungsnut 19 befördert wird.

Figur 7, die einen Teilschnitt entlang der Linie C-C von Figur 4 ist, und Figur 8, die eine Draufsicht auf diesen Teilschnitt ist, zeigen denjenigen Zeitpunkt, zu dem sich der Riegel 8 aus der einen Nut 19 gelöst hat und infolge des Anschlages 21 und des Mitnehmernockens 18 um 180° zur zweiten Arretierungsnut 19 hin befördert wird.

Die Wirkungsweise der erfindungsgemäßen Heuwerbungsmaschine ist wie folgt: Nachdem ein Schwad über die volle Länge des Feldes abgelegt ist und die Maschine ihre Arbeitsrichtung umkehren soll, betätigt der Fahrer vom Fahrersitz aus die Betätigungsvorrichtung 6, z. B. im Uhrzeinersinn, um so sowohl die Kurvenbahnen und die Laufräder um 180° zur Fahrtrichtung zu verstellen. Sowohl das Entriegeln als auch die Verstellung erfolgen durch die um die Zentralachse 10 umlaufende Steuerkurve 11 mit dem integrierten Kegelrad 15 durch teilweises Verdrehen bezüglich der Nabe 12. Durch Anheben der Stellschraube 16 und dadurch des Arretierungsriegels 8 aufgrund der Schräge 24 an der Steuerkurve 11 gelangt der Riegel außer Eingriff mit der ersten Arretierungsnut 19. Der Anschlag 22 am Ende der Schräge 24 nimmt beim Weiterdrehen der Steuerkurve 11 mittels der Betätigungsvorrichtung 6 den Arretierungsriegel 8 mit, bis dieser nach dem Entlanggleiten auf der Schräge 23 am Gehäuse 17 den Anschlag 22 überspringt, so daß sein Mitnehmernocken 18 mit dem weiteren Anschlag 21 in Eingriff gelangt. In dieser Stellung wird der

Arretie... ...gel und damit die zu den Rechrädern gehörenden Kurvenbahnen und über die Zentralachse 10 auch das Laufrad im 180° verschwenkt.

Kurz vor dem Erreichen der gegenüberliegenden Arretierungsnut 19 gleitet der Arretierungsriegel 8 die Schräge 23 hinab (Figur 2) und kann so ohne weiteres in die Arretierungsnut einschnappen. Bei diesem Einschnappen schwenkt der Mitnehmernocken 18 von dem Anschlag 21 auf der Steuerkurve 11 weg, so daß diese Steuerkurve mit dem zugehörigen Kegelrad 15 wieder in die Ausgangsstellung weitergedreht werden kann.

Die bisher üblichen Seilzüge zur Entriegelung oder das axiale Verschieben der Betätigungsvorrichtung entfällt mit der erfindungsgemäßen Heuwerbungsmaschine, bei der also nur noch eine einzige Drehbewegung der Betätigungsvorrichtung 6 erforderlich ist.

**Patentansprüche**

1. Heuwerbungsmaschine zum Anbau an eine Zugmaschine mit mindestens einem um eine im wesentlichen senkrechte Zentralachse (10) umlaufenden Rechrad, das mehrere bezüglich der Zentralachse (10) radial angeordnete, geführte Tragarme (3) mit Zinken (4) aufweist, wobei die Kurvenbahnen für die Tragarme (3) mit den zugehörigen, die Heuwerbungsmaschine unterstützenden Laufrädern (26) in Bezug auf die Zentralachse (10) in zwei um etwa 180° gegeneinander versetzt liegende Stellungen verschwenkbar und dort jeweils verriegelbar sind, dadurch gekennzeichnet, daß am oberen Ende der Zentralachse (10) eine drehbar gelagerte Steuerkurve (11) vorgesehen ist, deren unterer Teil als Zahnrad (15) ausgebildet ist, das mit einem Antriebszahnrad (14) einer Betätigungsvorrichtung (6) im Eingriff steht, daß die Steuerkurve (11) auf der drehbar gelagerten Nabe (12) eines Arretierungsriegels (8) gelagert ist, daß der Arretierungsriegel (8) mit einem Vorsprung (16) versehen ist, der mit einem ersten Anschlag (22) der Steuerkurve (11) zusammenwirkt und daß der Arretierungsriegel (8) einen Mitnehmernocken (18) aufweist, der mit einem zweiten Anschlag (21) der Steuerkurve zusammenwirkt.

2. Heuwerbungsmaschine nach Anspruch 1, dadurch gekennzeichnet, daß der eine Anschlag (22) am Ende einer Schräge (24) der Steuerkurve (11) angeordnet ist und mit dem als Stellschraube (16) ausgebildetem Vorsprung des Arretierungsriegels (8) zusammenwirkt.

3. Heuwerbungsmaschine nach Ansprüchen 1 und 2, dadurch gekennzeichnet, daß das die Steuerkurve (11) umgebende Gehäuse (17) zwei um etwa 180° zueinander versetzte Arretierungsnuten (19) aufweist, und daß beidseitig der Nuten (19) Schrägen (23) zur Führung des Arretierungsriegels (8) vorgesehen sind.

4. Heuwerbungsmaschine nach Anspruch 1, dadurch gekennzeichnet, daß das Zahnrad (15) der Steuerkurve (11) als Kegelrad ausgebildet ist und das Antriebszahnrad (14) der Betätigungsvorrichtung (6) als damit kämmendes Antriebsritzel ausgebildet ist.

5. Heuwerbungsmaschine nach einem der vorhergehenden Ansprüche, dadurch gekennzeichnet, daß der Arretierungsriegel (8) durch eine Feder (9) beaufschlagt ist, die ihn in Richtung der Arretierungsnuten (19) drückt.

6. Heuwerbungsmaschine nach einem der vorhergehenden Ansprüche, dadurch gekennzeichnet, daß die Halteanordnung (20) für den Arretierungsriegel (8) und seine Nabe (12) drehfest mit der Zentralachse (10) verbunden ist.

**Claims**

1. A haymaking machine to be attached to a tractor, with at least one raking wheel rotatable around a central axle (10), which is generally perpendicular, the raking wheel having several guided, supporting arms (3), that are disposed radially with reference to the central axle (10) and on which tines (4) are provided, whereby the cam track for the supporting arms (3), with the accompanying road wheels (26) supporting the haymaking machine, can be swivelled into two positions, displaced from one another by substantially 180° with reference to the central axle (10) and can be locked in these respective positions, characterized in that a pivotable cam (11) is provided at the upper end of the central axle (10), the lower part of the cam (11) is designed as a gear wheel (15), which engages a drive gear or pinion (14) of an operating device (6), in that the cam (11) is located on the pivotable hub (12) of a locking mechanism (8), in that the locking mechanism (8) is provided with a projection (16), which interacts with a first stop (22) on the cam (11), and in that the locking mechanism (8) has a driving or carrier cam (18), which interacts with the second stop (21) on the cam (11).

2. A haymaking machine as claimed in claim 1, wherein the one stop (22) is disposed at the end of a bevel (24) on the cam (11) and interacts with the projection on the locking mechanism (8), which projection is designed as an adjusting screw (16).

3. A haymaking machine as claimed in claims 1 and 2, wherein the housing (17) surrounding the cam (11) has two locking slots (19), which are displaced to one another by substantially 180° and on both sides of the slots (19) bevels (23) are provided to guide the locking mechanism (8).

4. A haymaking machine as claimed in claim 1, wherein the gear wheel (15) of the cam (11) is designed as a bevel gear and the drive gear or pinion (14) of the operating device is designed as the driving pinion which meshes with it.

5. A haymaking machine as claimed in any of the preceding claims, wherein the locking mechanism (8) is acted upon by a spring (9), which presses it in the direction of the locking slots (19).

6. A haymaking machine as claimed in any of the preceding claims, wherein the supporting arrangement (20) for the locking mechanism (8) and its hub (12) is non-pivotable and fixed to the central axle (10).

## Revendications

1. Machine de fenaison destinée à être portée par un tracteur avec au moins une roue rateleuse tournant autour d'un axe central (10) sensiblement vertical et qui présente plusieurs bras supports (3) avec des dents (4) disposées radialement par rapport à l'axe central (10), les chemins incurvés pour les bras supports (3) avec les roues (26) correspondantes qui supportent la machine de fenaison pouvant pivoter entre deux positions situées à environ 180° l'une par rapport à l'autre, par rapport à l'axe central (10) et étant verrouillables dans chacune de ces positions, caractérisée en ce qu'à la partie supérieure de l'axe central (10) est prévue une came de commande (11) rotative dont la partie inférieure est sous forme d'une roue dentée (15) qui est en prise avec une roue dentée d'entraînement (14) d'un dispositif d'actionnement (6), en ce que la came de commande (11) est placée sur le moyeu rotatif (12) d'un verrou d'arrêt (8), en ce que le verrou d'arrêt (8) est pourvu d'une saillie (16) qui coopère avec une première butée (22) de la came de commande (11) et en ce que le verrou d'arrêt (8) présente un ergot d'entraînement (18) qui coopère avec une deuxième butée (21) de la came de commande.

2. Machine de fenaison selon la revendication 1, caractérisée en ce que l'une (22) des butées est disposée à l'extrémité d'une déclivité (24) de la came de commande (11) et coopère avec la saillie en forme de vis de réglage (16) du verrou d'arrêt (8).

3. Machine de fenaison selon les revendications 1 et 2, caractérisée en ce que l'enceinte (17) entourant la came de commande (11) présente deux rainures d'arrêt (19) décalées de 180° environ l'une par rapport à l'autre, et en ce que des déclivités (23) pour le guidage du verrou d'arrêt (8) sont disposées des deux côtés des rainures (19).

4. Machine de fenaison selon la revendication 1, caractérisée en ce que la roue dentée (15) de la came de commande (11) est sous forme d'une roue conique et en ce que la roue dentée d'entraînement (14) du dispositif d'actionnement (6) est sous forme d'un pignon d'entraînement s'engrenant avec la précédente.

5. Machine de fenaison selon l'une des revendications précédentes, caractérisée en ce que le verrou d'arrêt (8) est sollicité par un ressort (9) qui le comprime en direction des rainures d'arrêt (19).

6. Machine de fenaison selon l'une des revendications précédentes, caractérisée en ce que le dispositif de maintien (20) pour le verrou d'arrêt (8) et son moyeu (12) est solidaire de l'axe central (10) en rotation.

Fig.2

Fig.1

Fig. 3

Fig. 4

Fig. 5

Fig. 6

Fig. 7

Fig. 8

3